# EUROPEAN PATENT APPLICATION

(11) **EP 4 831 310 A1**
(43) Date of publication of application: **28.10.2026**
(21) Application number: 25761652.4
(22) Date of filing: 15.01.2025
(51) Int. Cl.: C22B 3/16, B09B 3/80, B09B 5/00, C22B 3/44, B09B 101/55

(54) **METHOD FOR EXTRACTING CALCIUM**

(30) Priority: 27.02.2024 JP 2024027666
(71) Applicant: KABUSHIKI KAISHA KOBE SEIKO SHO (KOBE STEEL, LTD.), Hyogo 651-8585 (JP)
(72) Inventor: MURAKAMI, Kazuki, Hyogo 651-2271 (JP); KOBORI, Ryuichi, Hyogo 651-2271 (JP); SAKAI, Koji, Hyogo 651-2271 (JP); KINOSHITA, Shigeru, Hyogo 651-2271 (JP); SASAKI, Tatsuya, Hyogo 651-2271 (JP)
(74) Representative: Müller-Boré & Partner Patentanwälte PartG mbB
(86) International application number: PCT/JP2025/001010
(87) International publication number: WO 2025/182327

(57) **Abstract**

A method for extracting calcium according to an aspect of the present disclosure includes: a first preparation step of preparing a material containing calcium and a solvent for extracting calcium from the material; a first standing step of bringing the material and the solvent into contact with each other and allowing them to stand; and subsequent to the first standing step, a first separation step of separating, from the material, a calcium extract obtained by contact with the material.

## Description

### [TECHNICAL FIELD]

The present disclosure relates to a method for extracting calcium.

### [BACKGROUND ART]

In recent years, carbon dioxide has been considered to have a significant influence on global warming. As an effective measure against the global warming issues, a technology for fixing carbon dioxide has been attracting attention. Known is a method in which carbon dioxide is fixed by supplying carbon dioxide to an alkaline earth metal-containing substance being in contact with a solvent (Japanese Unexamined Patent Application, Publication No. 2005-097072).

### [PRIOR ART DOCUMENT]

### [PATENT DOCUMENT]

Patent Document 1: Japanese Unexamined Patent Application, Publication No. 2005-097072

### [SUMMARY OF THE INVENTION]

### [PROBLEMS TO BE SOLVED BY THE INVENTION]

In Patent Document 1, a mixture of water and an aqueous solution consisting of a weak base and a strong acid salt is used as the solvent for extracting calcium in the alkaline earth metal-containing substance (material) for fixing carbon dioxide, and the calcium is extracted by charging the material into the solvent and stirring the resulting mixture. The use of the aqueous solution may promote the phenomenon that components other than calcium in the material dissolve in the solvent, thereby comparatively lowering the calcium extraction rate.

In view of the foregoing circumstances, an object of the present disclosure is to provide a method for extracting calcium that enables easily improving the calcium extraction rate.

### [MEANS FOR SOLVING THE PROBLEMS]

A method for extracting calcium according to an aspect of the present disclosure for solving the above problems includes: a first preparation step of preparing a material containing calcium and a solvent for extracting calcium from the material; a first standing step of bringing the material and the solvent into contact with each other and allowing them to stand; and subsequent to the first standing step, a first separation step of separating, from the material, a calcium extract obtained by contact with the material.

### [EFFECTS OF THE INVENTION]

The method for extracting calcium of the present disclosure enables easily improving the calcium extraction rate.

### [BRIEF DESCRIPTION OF THE DRAWINGS]

FIG. 1 is a graph showing: an extraction rate of a calcium extract extracted by a method for extracting calcium according to an embodiment of the present disclosure; and extraction rates of calcium extracts extracted by other extraction methods.
FIG. 2 is a graph showing the extraction rate of the calcium extract in each of Test Examples 1 and 3 in FIG. 1.
FIG. 3 is a graph showing a solid concentration in the calcium extract in each of Test Examples 1 to 3 in FIG. 1.

### [DESCRIPTION OF EMBODIMENTS]

### Description of Embodiments of the Present Disclosure

Firstly, embodiment modes of the present disclosure will be listed and described.
(1) A method for extracting calcium according to an aspect of the present disclosure includes: a first preparation step of preparing a material containing calcium and a solvent for extracting calcium from the material; a first standing step of bringing the material and the solvent into contact with each other and allowing them to stand; and subsequent to the first standing step, a first separation step of separating, from the material, a calcium extract obtained by contact with the material.
   In the method for extracting calcium (hereinafter, may be simply referred to as "extraction method"), the prepared material containing calcium and the solvent prepared for extracting calcium from the material are brought in to contact with each other and allowed to stand. In other words, calcium is extracted from the material in a state in which the material and the solvent in contact with each other are retained without stirring, solvent passing, or the like. Since the contact with the material continues, the solvent can efficiently extract calcium in the material, whereby the extraction rate can be improved. Furthermore, the amount of fragments or the like of the material generated by collisions between the material particles due to stirring or solvent passing can be reduced, whereby the purity of the calcium extract can be improved. The method for extracting calcium does not require relatively large equipment or the like for extracting calcium from the material and thus enables easily and efficiently extracting calcium at relatively low cost.
(2) In the above (1), the method may further include: a second preparation step of further preparing a solvent for extracting calcium; a second standing step of bringing the solvent prepared in the second preparation step into contact with the material from which the calcium extract has been separated and allowing them to stand; and subsequent to the second standing step, a second separation step of separating, from the material, a calcium extract obtained by contact with the material. By further bringing the new solvent into contact with the material from which calcium has been extracted by contact with the solvent, calcium remaining in the material can be easily extracted.
(3) In the above (1) or (2), in the first standing step, the material and the solvent may be brought into contact with each other and allowed to stand in a tank, in the first separation step, the calcium extract may be discharged from a discharge port provided in the tank to be separated from the material, and during the discharge from the discharge port, foreign substances in the calcium extract may be filtered out by the material. When the foreign substances in the solvent are filtered out by the material, the purity of the calcium extract can be easily improved.
(4) In any one of the above (1) to (3), the material may be steelmaking slag. By using steelmaking slag as the material containing calcium, the calcium extract can be obtained at relatively low cost, and the steelmaking slag can be reused.
(5) In any one of the above (1) to (4), in the first standing step, a plurality of materials may be brought into contact with the solvent, and the plurality of materials may be granular or powdery bodies having an average particle diameter of less than or equal to 10 mm. By bringing the materials being granular or powdery bodies having an average particle diameter of less than or equal to 10 mm into contact with the solvent, the calcium extraction rate can be further improved.
(6) In any one of the above (1) to (5), the solvent may contain a polyol compound. When the solvent contains the polyol compound, the calcium extraction rate can be still further improved.
(7) In the above (6), the polyol compound may be glycerin. By using glycerin as the polyol compound, the calcium extraction rate can be even further improved.
(8) In the above (4), when a ratio of a total weight of the solvent in contact with the steel slag to a weight of the steel slag is defined as a liquid-solid ratio, the contact between the material and the solvent may be greater than or equal to 1.0 [hour/liquid-solid ratio]. This enables efficiently extracting calcium from the steelmaking slag.

As referred to herein, the "polyol compound" means an organic compound having a plurality of alcoholic hydroxyl groups (groups each obtained by substituting a hydrogen atom of an aliphatic hydrocarbon with a hydroxy group (-OH)).

### Details of Modes for Implementing the Invention

Hereinafter, an embodiment of the method for extracting calcium will be described in detail.

The extraction method includes: a first preparation step of preparing a material containing calcium and a solvent for extracting calcium from the material; a first standing step of bringing the material and the solvent into contact with each other and allowing them to stand; and subsequent to the first standing step, a first separation step of separating, from the material, a calcium extract obtained by contact with the material.

The extraction method preferably further includes: a second preparation step of further preparing a solvent for extracting calcium; a second standing step of bringing the solvent prepared in the second preparation step into contact with the material from which the calcium extract has been separated and allowing them to stand; and subsequent to the second standing step, a second separation step of separating, from the material, a calcium extract obtained by contact with the material.

### First Preparation Step

The material to be prepared in the first preparation step is not particularly limited as long as it contains calcium, may be a natural mineral or the like, and is preferably waste or the like in light of the environmental protection. The waste refers to industrial waste to be disposed such as construction waste, incineration ash, and by-products generated in production processes, household waste, disaster waste, and the like and is exemplified by cement waste, concrete waste, glass waste, plasterboard waste, interior demolition waste such as calcium silicate boards, carbide sludge, woody biomass waste, coal ash, incineration ash of trash (city refuse, industrial refuse, disaster refuse, etc.) or sludge, fly ash obtained with a dust collector in an incinerator or a firing furnace, woody biomass incineration ash, paper sludge incineration ash, cinders, soot dust, steelmaking slag, blast furnace slag, paper sludge, undersize materials, and the like. In these materials, for example, calcium is present in form of calcium oxide (CaO). Of these, the steelmaking slag is preferably used as the material. The steelmaking slag means slag generated in a steelmaking process, such as converter slag or electric furnace slag, and contains a relatively large amount of calcium. Furthermore, the steelmaking slag can be reused, for example, as a road base material (road material), a fertilizer resource, and the like by being dried after calcium extraction.

The material is preferably granular or powdery bodies having an average particle diameter of less than or equal to 10 mm. Although the material may be aggregates, the aggregates are preferably made into granular bodies having an average particle diameter of less than or equal to 10 mm by crushing or the like. When the material has an average particle diameter of less than or equal to 10 mm, the contact area with the solvent can be increased, whereby the calcium extraction efficiency can be improved. The lower limit value of the average particle diameter of the material is not particularly limited and may be 3 mm or 5 mm. It is to be noted that the average particle diameter means a value (D50 value) based on the 50% cumulative volume as measured with a laser scattering particle size distribution analyzer.

A solvent to be prepared is not particularly limited as long as it can extract calcium from the material and preferably contains a polyol compound. The polyol compound is an organic compound having a plurality of alcoholic hydroxyl groups. An alcoholic hydroxyl group is a hydroxy group obtained by substituting a hydrogen atom of an aliphatic hydrocarbon and does not encompass a hydroxy group obtained by substituting a hydrogen atom of a hydrocarbon constituting an aromatic ring (for example, a hydroxy group of phenol).

Furthermore, the solvent preferably further contains water. In other words, the solvent is preferably a mixture of the polyol compound and water. The upper limit value of the concentration of the polyol compound in the mixture is preferably 60% by mass, more preferably 50% by mass, and still more preferably 40% by mass. The lower limit value of the above concentration is preferably 20% by mass and more preferably 30% by mass. When the polyol compound concentration falls within the above range, a sufficient amount of calcium can be extracted from the material into the solvent. The water is not particularly limited and is exemplified by pure water.

The polyol compound is not particularly limited as long as it is an organic compound having a plurality of alcoholic hydroxyl groups and is preferably a diol compound or a triol compound. The diol compound and the triol compound are typically liquid at normal temperature and pressure and thus can be relatively easily mixed with the water. It is to be noted that the "diol compound" means an organic compound having two alcoholic hydroxyl groups, and the "triol compound" means an organic compound having three alcoholic hydroxyl groups.

The diol compound is not particularly limited as long as it is an organic compound having two alcoholic hydroxyl groups. Examples of the diol compound include ethylene glycol, propylene glycol, diethylene glycol, butanediol, and diethanolamine. Of these, for example, one or two or more selected from the group consisting of ethylene glycol, propylene glycol, and diethylene glycol are preferred as the diol compound.

The triol compound is not particularly limited as long as it is an organic compound having three alcoholic hydroxyl groups and is preferably glycerin. By using glycerin, the extraction efficiency of calcium from the material can be further improved.

### First Standing Step

In the first standing step, the material and the solvent are brought into contact with each other and allowed to stand. For example, the material and the solvent may be brought into contact with each other by charging the material into a tank (container) and then injecting the solvent or by injecting the solvent into a tank and then charging the material. The material may be mixed with part of the solvent beforehand to form a slurry, and the slurry and a remainder of the solvent may be brought into contact with each other. The solvent is preferably injected such that the entirety of the material or the slurry in the tank is submerged. Although the material in form of one or more relatively large aggregates may be charged into the tank, a plurality of granular or powdery materials are preferably charged.

In the first standing step, the material and the solvent are retained in the tank without stirring the material and the solvent in contact with each other in the tank or without keeping injecting the solvent to be circulated in the tank. In other words, the material and the solvent in contact with each other in the tank are left to stand. This enables the solvent to maintain the contact with the material, whereby calcium in the material can be efficiently dissolved in the solvent. As a result of dissolution of calcium, the solvent changes to a calcium extract.

A time period during which the material and the solvent in contact with each other are allowed to stand, i.e., an actual time period (standing time period) during which the contact state continues is not particularly limited and may be determined in accordance with the properties, amounts, and the like of the material and the solvent. In the case in which the material is steelmaking slag, when a ratio of a total weight of the solvent in contact with the steel slag to a weight of the steel slag is defined as a liquid-solid ratio, the contact between the material and the solvent is preferably greater than or equal to 1.0 [hour/liquid-solid ratio] (hereinafter, a time period of the contact with respect to the liquid-solid ratio is referred to as "contact time period"). The lower limit value of the contact time period may be 1.2 [hour/liquid-solid ratio] or 1.5 [hour/liquid-solid ratio]. The upper limit value of the contact time period in the case of the steelmaking slag is not particularly limited and may be 3.0 [hour/liquid-solid ratio] or 2.5 [hour/liquid-solid ratio]. When the contact time period falls within the above range, the certainty of extracting calcium at a high extraction rate can be improved.

### First Separation Step

In the first separation step subsequent to the first standing step, the calcium extract obtained by contact with the material is separated from the material. A separation method is not particularly limited. For example, a known solid-liquid separator may be used, but the separation is preferably performed by discharging the calcium extract from a discharge port provided on a bottom portion or a side portion of the tank. The discharge port on the side portion is preferably provided in a lower part of the tank.

For example, foreign substances such as fragments generated by collision or the like at the time of charging the material into the tank and impurities attached to the material are preferably inhibited from mixing into the calcium extract. When the foreign substances are present in the calcium extract, it may be necessary to remove the foreign substances to improve the purity of the calcium extract. To remove such foreign substances beforehand, the discharge port may be provided with filter media such as a filter.

In the first separation step, it is preferred that the calcium extract is separated by being discharged from discharge port of the tank and that the foreign substances in the calcium extract are filtered out by the material. In other words, the material preferably functions as filter media for the foreign substances. When the foreign substances are filtered out by the material, the purity of the calcium extract discharged from the discharge port can be easily improved. When the material is granular or powdery bodies having an average particle diameter of less than or equal to 10 mm, the effect of removing fine foreign substances can be improved, whereby the purity of the calcium extract can be further improved.

In a case in which the material has a lower specific gravity than the solvent, that is, the material drifts or floats on the solvent, the solvent is preferably injected so as not to rise above the upper face (height) of the material charged into the tank. When the solvent does not rise above the upper face of the material charged into the tank, the material can be inhibited from drifting or floating on the solvent, whereby the foreign substances can be effectively filtered out.

### Second Preparation Step

The solvent to be prepared in the second preparation step may be different from but is preferably the same as the solvent prepared in the first preparation step.

### Second Standing Step

In the second standing step, the solvent prepared in the second preparation step is brought into contact with the material from which the calcium extract has been separated, and the material and the solvent are allowed to stand. In other words, a new solvent for extracting calcium is brought into contact with the material from which the calcium extract has been separated. By repeatedly bringing the solvent for extracting calcium into contact with the material, the amount of calcium extracted from the material can be increased.

### Second Separation Step

A method for separating, from the material after the second standing step, the calcium extract obtained by contact with the material, may be different from but is preferably the same as the method in the first separation step.

In the extraction method, the material containing calcium and the solvent for extracting calcium from the material are brought into contact with each other and allowed to stand; therefore, the contact between the material and the solvent continues, and thus, calcium in the material can be efficiently extracted to improve the extraction rate. Since the solvent does not flow in the tank, the material can be inhibited from flowing out of the tank even when the material has a relatively low specific gravity, and thus, calcium can be efficiently extracted to improve the extraction rate. Furthermore, for example, even when the material is brittle, collisions between the material particles due to stirring and/or solvent passing do not occur, or even when the material is paper scraps or the like, they do not break up in the solvent owing to stirring and/or solvent passing; thus, a part of the material or the like can be inhibited from mixing into the calcium extract. Therefore, the extraction method enables improving the purity of the calcium extract.

The calcium extract obtained by the extraction method may be used to fix carbon dioxide. In other words, in a method for fixing carbon dioxide, the method including: a step of obtaining a calcium extract; a step of bringing a gas containing carbon dioxide into contact with the calcium extract; and a step of separating a precipitate from the calcium extract which has been in contact with carbon dioxide, the step of obtaining the calcium extract preferably corresponds to the extraction method. Since the extraction method enables extracting calcium at a high extraction rate, the amount of carbon dioxide fixed by calcium in the obtained calcium extract can be increased, whereby the reduced amount of carbon dioxide can be increased. Furthermore, carbon dioxide can be fixed at low cost, and the amount of the precipitate (calcium carbonate) to be obtained can be increased. The calcium extract from which the precipitate has been separated in the separation step may be used as the solvent in the extraction method.

### Other Embodiments

The above embodiments do not limit the configuration of the present invention. Therefore, in the above embodiments, the components of each part of the above embodiments can be omitted, replaced, or added based on the description in the present specification and general technical knowledge, and such omission, replacement, or addition should be construed as falling within the scope of the present invention.

### EXAMPLES

Hereinafter, the present disclosure will be described further in detail by way of Examples, but the present disclosure is not limited to the Examples.

Steelmaking slag containing unreacted CaO and unreacted Ca(OH)₂ at a mass ratio of greater than or equal to 3% and less than or equal to 4% was prepared as a material containing calcium and crushed to have an average particle diameter of 10 mm. As a solvent for extracting calcium from the steelmaking slag, glycerin having a purity of greater than or equal to 84% and less than or equal to 87% and water were prepared and mixed such that the glycerin concentration was 40% by mass.

### Test Example 1

Into a tank having internal dimensions of 500 mm (width) × 250 mm (length) × 500 mm (height), 35 kg of the material was charged, the solvent was injected at a flow rate of 0.7 kg/min until an upper end of the material was submerged, and the material and the solvent were allowed to stand for 30 minutes. After the standing, a calcium extract was discharged from a bottom portion of the tank to be separated from the material. The time period until the calcium extract was not discharged any more (time period until the completion of discharge) was approximately 30 to 45 minutes. After the completion of discharge, the solvent was injected into the tank under the same conditions, and the standing and the separation were performed under the same conditions. This procedure was repeated until the total weight of the solvent injected into the tank and brought into contact with the material reached approximately 5 times the weight of the material.

### Test Example 2

Into a tank having the same internal dimensions as the above tank, 100 kg of the material was charged, and the solvent was continuously supplied at 0.7 kg/min so as to flow in the tank. A calcium extract was allowed to overflow from an upper portion of the tank and collected. The solvent was kept supplied until the total weight thereof reached 5 times the weight of the material.

### Test Example 3

Calcium was extracted under the same conditions as Test Example 1, except that 100 kg of the material was charged into a tank having the same internal dimensions as the above tank and the flow rate of the solvent supplied was 1.5 kg/min.

The Ca²⁺concentrations in the calcium extracts obtained in Test Examples 1 to 3 were measured to calculate the respective calcium extraction rates in accordance with the following formula 1. The results are shown in Table 1. The contact time period of each test example in Table 1 shows a time period with respect to a liquid-solid ratio, which is defined as a ratio of the total weight of the solvent in contact with the material to the weight of the material.$Ca \left[mol\right] in calcium extract / Ca \left[mol\right] in material \times 100$ (1)

**Table 1**

| | Ca extraction method | Contact time period [hour/liquid-solid ratio] | Ca extraction rate [%] |
|---|---|---|---|
| Test Example 1 | standing | 1.91 | 75.89 |
| Test Example 2 | fluid passing | 2.38 | 60.33 |
| Test Example 3 | standing | 0.36 | 50.89 |

Table 1 indicates that as compared with Test Example 2, in which calcium was extracted by fluid passing, Test Example 1, in which calcium was extracted by standing, showed a high calcium extraction rate in spite of the short contact time period. This is presumably because owing to standing rather than fluid passing, the solvent efficiently flew between the material particles (through spaces between the material particles) to be brought into contact therewith.

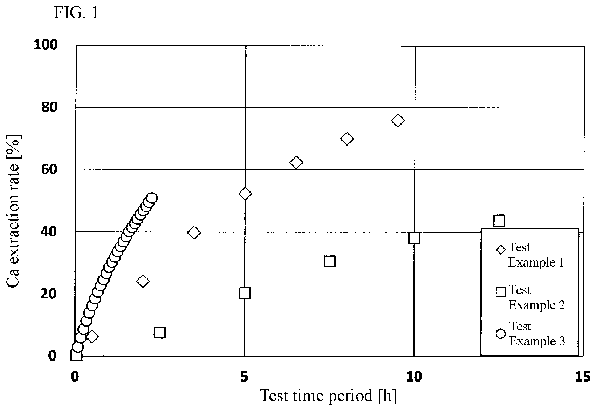

FIG. 1 shows a relation between the test time period (time period from the start to the end of the test) and the calcium extraction rate in each of Test Examples 1 and 3. Test Example 3, in which the standing time period (actual time period during which the contact state continued) per standing was 5 minutes, showed a higher calcium extraction rate than Test Example 1, when compared in terms of the time period until the end of the test of Test Example 3 (2.25 hours). On the other hand, in the case in which the test time period was greater than or equal to 5 hours, Test Example 1 showed a higher calcium extraction rate than Test Example 3. This indicates the following: in the case in which the standing time period was shortened, the interval between the injection of the solvent and the discharge of the calcium extract became shorter, and the solvent and the calcium extract flew more frequently between the material particles; accordingly, the calcium extraction effect due to the continuous contact between the solvent and the material was inhibited, and thus, the calcium extraction effect per standing was limited to a relatively small improvement, although the calcium extraction effect per unit time was improved. This suggests that the calcium extraction rate can be further improved by setting an appropriate number of times of standing while ensuring an appropriate standing time period for extracting calcium.

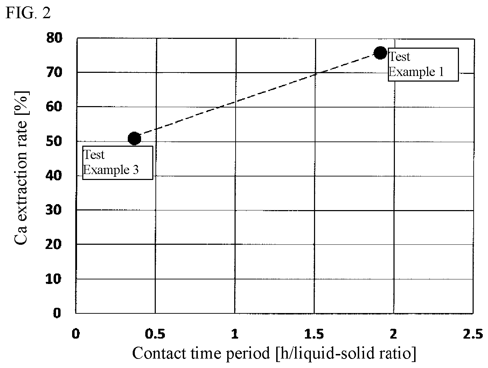

FIG. 2 shows a relation between the contact time period and the calcium extraction rate in each of Test Examples 1 and 3. When Test Examples 1 and 3 are connected by a straight line, it is found that by setting the contact time period to 1.0 [hour/liquid-solid ratio], the calcium extraction rate becomes greater than 60%, which is greater than or equal to the calcium extraction rate of Test Example 2, in which calcium was extracted by fluid passing. Furthermore, it is found that the extraction rate becomes as high as approximately 70% by setting the contact time period to 1.55 [hour/liquid-solid ratio].

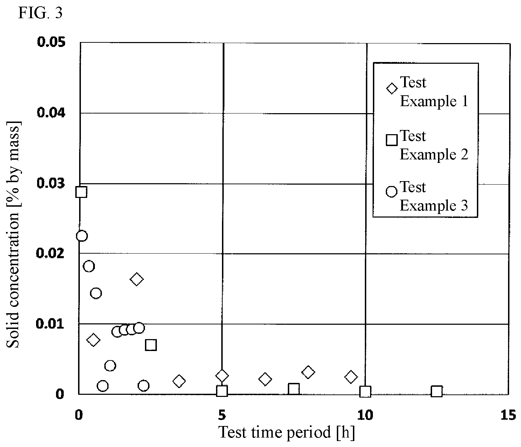

The calcium extract of each test example discharged to be separated from the material was filtered under reduced pressure, foreign substances in each calcium extract were dried, and the concentration (solid concentration) of the foreign substances in each calcium extract was evaluated. The results are shown in FIG. 3. According to FIG. 3, the solid concentration of Test Example 2, in which the calcium extract was allowed to overflow and collected, was comparable to that of Test Example 1. Since most of the foreign substances are considered to be settled in the solvent, Test Example 2, in which the calcium extract was allowed to overflow and collected, is considered to show a relatively low solid concentration. The fact that the solid concentration in the calcium extract of Test Example 1 discharged from the bottom portion of the tank was comparable to that of Test Example 2 indicates that the material functioned as filter media, thereby inhibiting the foreign substances from mixing into the calcium extract to be discharged from the bottom portion.

### [INDUSTRIAL APPLICABILITY]

The method for extracting calcium of the present disclosure enables efficiently extracting calcium without using special equipment and the like and can be thus suitably used for recycling of industrial waste, fixation of carbon dioxide to the extracted calcium extract, etc.

## Claims

1. A method for extracting calcium, the method comprising:
a first preparation step of preparing a material containing calcium and a solvent for extracting calcium from the material;
a first standing step of bringing the material and the solvent into contact with each other and allowing them to stand; and
subsequent to the first standing step, a first separation step of separating, from the material, a calcium extract obtained by contact with the material.

2. The method for extracting calcium according to claim 1, further comprising:
a second preparation step of further preparing a solvent for extracting calcium;
a second standing step of bringing the solvent prepared in the second preparation step into contact with the material from which the calcium extract has been separated and allowing them to stand; and
subsequent to the second standing step, a second separation step of separating, from the material, a calcium extract obtained by contact with the material.

3. The method for extracting calcium according to claim 1, wherein
in the first standing step, the material and the solvent are brought into contact with each other and allowed to stand in a tank,
in the first separation step, the calcium extract is discharged from a discharge port provided in the tank to be separated from the material, and
during the discharge from the discharge port, foreign substances in the calcium extract are filtered out by the material.

4. The method for extracting calcium according to claim 1, wherein the material is steelmaking slag.

5. The method for extracting calcium according to claim 3 or 4, wherein
in the first standing step, a plurality of materials are brought into contact with the solvent and allowed to stand, and
the plurality of materials are granular or powdery bodies having an average particle diameter of less than or equal to 10 mm.

6. The method for extracting calcium according to claim 1, wherein the solvent contains a polyol compound.

7. The method for extracting calcium according to claim 6, wherein the polyol compound is glycerin.

8. The method for extracting calcium according to claim 4, wherein in the first standing step, when a ratio of a total weight of the solvent in contact with the steel slag to a weight of the steel slag is defined as a liquid-solid ratio, the contact between the material and the solvent is greater than or equal to 1.0 [hour/liquid-solid ratio].
